# EUROPÄISCHE PATENTANMELDUNG

(11) **EP 1 048 534 A1**
(43) Veröffentlichungstag der Anmeldung: **02.11.2000**
(21) Anmeldenummer: 99108166.2
(22) Anmeldetag: 26.04.1999
(51) Int. Cl.: B60R 21/32

(54) **Kapazitiver Sensor, inbesondere Kraftfahrzeug-Sitzbelegungssensor, und Verfahren zum Erfassen des Vorhandenseins eines Objekts durch Autokorrelation des Signals**

(71) Anmelder: SIEMENS AKTIENGESELLSCHAFT, 80333 München (DE)
(72) Erfinder: Grasshoff, Helge, 93049 Regensburg (DE); Hermann, Stefan, 93096 Köfering (DE)

(57) **Zusammenfassung**

Das kapazitive Sensorelement (31) wird durch ein breitbandiges Treibersignal erregt und erzeugt ein Meßsignal, das einer Autokorrelation mit dem Treibersignal unterzogen wird. Das Treibersignal ist vorzugsweise ein binäres Pseudozufallsrauschsignal. Hierdurch läßt sich guter Störabstand erreichen. Die Autokorrelation kann bei binärem Treibersignal und Meßsignal im einfachsten Fall durch ein einfaches UND-Glied (36) realisiert werden.

## Beschreibung

Die Erfindung betrifft einen kapazitiven Sensor zum Erfassen des Vorhandenseins und/oder der Position eines Objekts gemäß dem Oberbegriff des Patentanspruchs 1.

Aus der DE 41 10 936 A1 ist ein derartiger kapazitiver Sensor bekannt, der als Sitzbelegungssensor dient und mindestens zwei in der Sitzfläche oder der Rückenlehne eines Kraftfahrzeugsitzes angeordnete, gegenseitig isolierte Elektroden aufweist. Die Elektroden werden mit einer Wechselspannung gespeist, wobei die Amplitude und die Phasenlage der Wechselspannung, die über der Kapazität abfällt, als Maß für die Kapazität ausgewertet werden.

Aus der US 3 874 474 ist eine Vorrichtung zur Überprüfung des Anlegezustands eines Kraftfahrzeug-Sicherheitsgurts bekannt, bei der ein kapazitiver, als Sitzmatte ausgebildeter Sensor durch eine Oszillatorschaltung angesteuert wird und das sitzbelegungsabhängige Oszillator-Ausgangssignal bei nicht erfolgter Gurtanlegung an eine Warneinrichtung angelegt wird.

In der DE 36 35 644 C2 ist ein Sitzbelegungsdetektor beschrieben, der mindestens eine in die Sitzfläche oder Rückenlehne eines Kraftfahrzeugsitzes oder in den Fußraum eingebaute Sensormatte umfaßt, die von einer Treiberschaltung mit einem Wechselsignal gespeist wird. Das Meßsignal, das an der mit der oder den Sensormatten verbundenen Treiberschaltung abgegriffen wird und sich sitzbelegungsabhängig ändert, wird einer Tiefpaßfilterung und einem anschließenden Schwellwertvergleich zur Detektion des Sitzbelegungszustands unterzogen.

Allgemein gilt bei kapazitiven Sensoren und damit auch bei den vorstehend erläuterten Gestaltungen, daß eine hohe Störanfälligkeit durch kapazitive Einstreuungen oder durch Änderungen der elektrostatischen Feldverhältnisse vorhanden ist, so daß die Meßgenauigkeit beschränkt ist. Wenn jedoch solche kapazitiven Sensoren z.B. als Sitzbelegungssensoren eingesetzt und bei der Entscheidung über die Betätigung einer Insassenschutzvorrichtung (beispielsweise Auslösen eines oder mehrerer Airbags, eines Gurtstraffersystems oder eines Überrollbügels, oder auch einfaches Steuern des Ausfahrens von Kopfstützen) berücksichtigt werden, besteht ein Erfordernis nach möglichst guter Meßgenauigkeit. Solche hohe Meßgenauigkeit ist auch in vielen anderen Anwendungsfällen erwünscht.

Der Erfindung liegt die Aufgabe zugrunde, eine Meßelektronik zum Betrieb eines kapazitiven Sensors zu schaffen, die sich durch verhältnismäßig gute Meßgenauigkeit auszeichnet.

Diese Aufgabe wird mit den im Patentanspruch 1 angegebenen Merkmalen gelöst.

Vorteilhafte Ausgestaltungen der Erfindung sind in den Unteransprüchen angegeben.

Weiterhin wird mit der Erfindung gemäß Anspruch 10 ein Verfahren zum Ermitteln des Vorhandenseins und/oder der Position eines Objekts geschaffen, das sich beispielsweise gut zur Sitzbelegungserkennung eignet.

Im Rahmen der Erfindung liegt auch ein Kraftfahrzeug-Insassenschutzsystem gemäß Anspruch 11, das mit einem oder mehreren derartigen kapazitiven Sensoren zur Sitzbelegungserkennung und/oder zur Positionserkennung ausgestattet ist.

Bei der Erfindung wird eine Autokorrelation zur Ermittlung von das Vorhandensein und/oder die Position eines Objekts anzeigenden Kapazitätsänderungen eingesetzt, bei der das zur Erregung des kapazitiven Sensorelements benutzte Treibersignal zugleich auch als Referenzsignal dient, das mit dem am kapazitiven Sensorelement oder einer mit diesem verbundenen Komponente abgegriffenen Meßsignal verglichen wird. Da das Meßsignal durch die auf das Sensorelement einwirkenden kapazitiven Einflüsse verändert wird, ergibt sich als Ergebnis dieses Vergleichs zwischen Treibersignal und Meßsignal eine quantitative Aussage über den Grad der Übereinstimmung der beiden verglichenen Signale, was wiederum eine Aussage über die kapazitiven Verhältnisse im Bereich des Sensorelements und damit über den Sitzbelegungszustand und/oder die Art der Sitzbelegung, beispielsweise seitlich verschobene oder vorverlagerte Sitzposition, ergibt. Der Vergleich der beiden Signale kann vorzugsweise durch eine gegenseitige Multiplikation mit anschließender Integration durchgeführt werden.

Als Treibersignal wird vorzugsweise ein breitbandiges Referenzsignal erzeugt, das in bevorzugter Ausführungsform über eine Impedanz in das kapazitive Sensorelement eingespeist wird. Die Impedanz kann ein reiner Widerstand sein, weist vorzugsweise jedoch auch eine induktive Komponente auf, so daß sich Resonanzverhalten einstellen kann, das zu erhöhten und damit besser auswertbaren Meßsignaländerungen führt. Das Resonanzverhalten kann auch über eine aktive Sensorbeschaltung herbeigeführt werden, die eine bandpaßähnliche Charakteristik aufweist. Das Meßsignal kann hierbei an dem Verbindungspunkt zwischen der Impedanz und dem Sensorelement abgegriffen und dann mit dem Treibersignal multipliziert und anschließend integriert werden.

Zusätzlich kann ein Quadratursignal erzeugt werden, das identischen Verlauf wie das Treibersignal aufweist, jedoch gegenüber diesem um 90° phasenverschoben ist. Auch dieses Quadratursignal kann mit dem Meßsignal multipliziert und anschließend integriert werden, so daß nicht nur ein dem Realteil ähnliches Signal, sondern auch ein dem Imaginärteil ähnliches Meßsignal erfaßbar ist.

Das Treibersignal ist vorzugsweise ein binäres, d.h. nur zwischen zwei Pegelzuständen wechselndes Signal. Ein solches binäres Signal läßt sich nicht nur verhältnismäßig einfach generieren, indem beispielsweise lediglich zwischen positivem Pegel und Nullpegel gewechselt wird, sondern auch einfach weiterverarbeiten und auswerten. Das Signal kann sowohl hardware- als auch softwaremäßig in einem µC generiert werden. Das Treibersignal kann auch als Sinussignal ausgelegt sein.

Der Multiplikator kann analog aufgebaut oder als steuerbarer Schalter ausgelegt sein. Dieser Schalter schaltet dann abwechselnd das Meßsignal und das invertierte Meßsignal und wird über das Treibersignal oder gegebenenfalls, sofern vorhanden, durch das Quadratursignal gesteuert. Insbesondere im Fall eines binären Treibersignals ist auch eine schaltungsvereinvachende Quasi-Multiplikation durch ein UND-Gatter möglich, an dessen einem Eingang das Treibersignal oder Quadratursignal und an dessen anderem Eingang das Meßsignal, gegebenenfalls invertiert oder in sonstiger Weise vorverarbeitet, anliegt.

Am Ausgang des Multiplizierglieds ist vorzugsweise ein Integrator angeordnet, der analog (zum Beispiel als RC-Tiefpaß oder als aktiver Integrator) oder auch digital (zum Beispiel als Fangzähler) ausgebildet sein kann und dessen Ausgangssignal ein Maß für die Ähnlichkeit zwischen dem Meßsignal und dem Treibersignal oder dem Quadratursignal darstellt. Ist z.B. bei Auslegung als Sitzbelegungssensor der überwachte Kraftfahrzeugsitz, zum Beispiel Beifahrersitz, nicht belegt, weist der kapazitive Sensor im wesentlichen seinen Nennwert auf, so daß eine große Übereinstimmung zwischen dem Treibersignal und dem Meßsignal vorliegt. Ist demgegenüber der Sitz belegt, wird der kapazitive Sensor verstimmt. Damit wird das Meßsignal in seiner Phase gegenüber dem Treibersignal verschoben, so daß die Ähnlichkeit abnimmt.

Das erfindungsgemäße Prinzip des Einsatzes der Autokorrelation zur meßtechnischen Auswertung des kapazitiven Sensorelements führt zu einer hohen Störunanfälligkeit, da die Meßschaltung eine hohe Filterwirkung besitzt und Störsignale wirksam unterdrückt werden, da sie typischerweise wenig Ähnlichkeit mit dem Meßsignal haben. Insbesondere bei Einsatz als kapazitiver Sitzbelegungssensor muß mit starken elektrischen Störungen gerechnet werden, die sich dem Meßsignal überlagern. Durch den erfindungsgemäßen Schaltungsaufbau wird die Meßinformation zuverlässig und sehr präzise selektiert, so daß insbesondere bei Verwendung mehrerer, im Kraftfahrzeugsitz angeordneter kapazitiver Sensorelemente nicht nur die Belegung oder Nichtbelegung, sondern auch die Art der Belegung beispielsweise des Beifahrersitzes durch den Beifahrer, etwa eine außermittige Sitzposition oder eine schräge Kopfhaltung zuverlässig erkennbar ist. Diese zusätzliche Information kann gezielt zur Steuerung beispielsweise von Seitenairbags oder sonstigen Insassenschutzsystemen ausgenutzt werden.

Die Signalquelle erzeugt vorzugsweise ein binäres Pseudo-Rauschsignal (pseudobinäres Rauschsignal), das sehr breitbandig ist und dessen generierungsbedingte Periodenlänge sehr groß ist. Damit ergibt sich hohe Filterwirkung aufgrund der äußerst geringen Wahrscheinlichkeit, daß externe Störeinflüsse mit der Quasi-Zufallsverteilung der Nullen und Einsen im Treibersignal übereinstimmen. Die Signalquelle kann auch ein binäres, pulsweitenmoduliertes Signal erzeugen. Hierbei ergibt sich ebenfalls große Breitbandigkeit und damit geringe Beeinflußbarkeit durch Störungen, insbesondere periodische Störsignale.

Im Rahmen der Erfindung liegt auch eine Beschaltung des kapazitiven Sensorelements mit einer induktiven Impedanz, über die das Treibersignal in das Sensorelement eingespeist wird. Die induktive Impedanz bildet in diesem Fall mit dem Sensorelement einen Schwingkreis aus, wodurch sich nicht nur der Meßbereich erhöht, sondern auch die Empfindlichkeit der Meßanordnung verbessert, insbesondere wenn der Schwingkreis mit seiner Resonanzfrequenz angeregt wird. In diesem Fall kann das Treibersignal anstelle eines breitbandigen Signals auch ein schmalbandiges Signal, beispielsweise ein sinusförmiges oder rechteckförmiges Signal mit Signalperiodizität bei einer festen Frequenz sein. Die Periodizität sollte mit der Resonanzfrequenz des Schwingkreises im unverstimmten Fall, d.h. bei fehlendem zu detektierendem Objekt, im wesentlichen übereinstimmen oder zumindest eine bei der Resonanzfrequenz liegende Frequenzkomponente enthalten. Der Autokorrelator kann in diesem Fall als phasenselektiver Gleichrichter ausgelegt sein. Hierbei ist es möglich, direkt den Realteil (durch Multiplikation des Meßsignals mit dem Treibersignal) und den Imaginärteil (durch Multiplikation des Meßsignals mit dem Quadratursignal) des Sensorsignals zu messen.

Die Erfindung wird nachstehend anhand von Ausführungsbeispielen unter Bezugnahme auf die Zeichnungen näher beschrieben.
- Fig. 1: zeigt ein allgemeines Prinzipschaltbild der Meßanordnung;
- Fig. 2: zeigt ein detailliertes Blockschaltbild eines Ausführungsbeispiels;
- Fig. 3: zeigt eine Schaltung zur Erzeugung eines Treibersignals und eines Quadratursignals aus einem eingangsseitigen Taktsignal; und
- Fig. 4: zeigt eine Schaltung zur Erzeugung eines pseudobinären, als Treibersignal dienenden Rauschsignals.

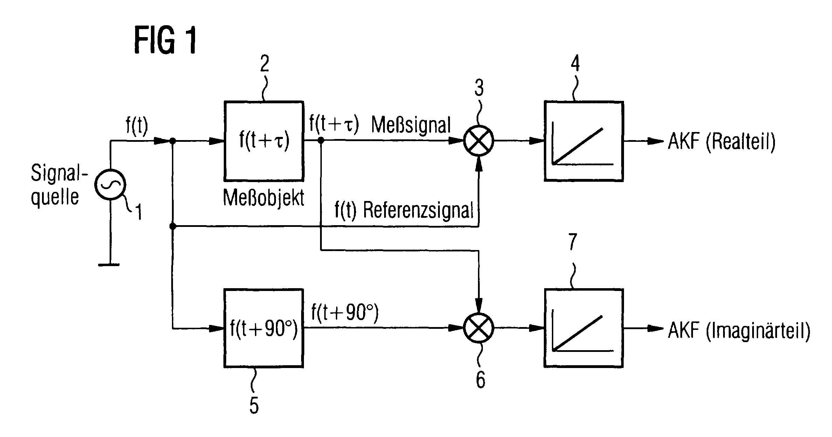

Fig. 1 zeigt das allgemeine Prinzipschaltbild einer mit Auto-korrelation arbeitenden Meßanordnung, bei der eine Signalquelle 1 ein sinusförmiges, schmalbandiges oder breitbandiges Treibersignal f(t) erzeugt, das an das Meßobjekt, beispielsweise ein in einem Kraftfahrzeugsitz eingebautes kapazitives Sensorelement 2 angelegt wird. Durch das Sensorelement 2 wird das Treibersignal in seiner Phase und gegebenenfalls auch Amplitude beeinflußt, so daß am Ausgang des Sensorelements 2 ein phasenverschobenes Meßsignal abgegeben wird. Dieses Meßsignal wird in einem Multiplikator 3 mit dem ebenfalls an den Multiplikator 3 angelegten, nun als Referenzsignal dienenden Treibersignal f(t) multipliziert, so daß am Multiplizierer-Ausgang ein dem Realteil entsprechendes Ausgangssignal erhalten wird, das einer Weiterverarbeitung durch ein Schaltungselement 4, beispielsweise einen Verstärker oder ein Tiefpaßfilter unterzogen wird. Am Ausgang des Schaltungselements 4 befindet sich eine nicht dargestellte Schaltungsanordnung zur Auswertung des Ausgangssignals des Schaltungselements 4 im Hinblick auf die Ermittlung der Phasenlage und/oder Amplitude des Meßsignals und damit zur Erfassung des Vorhandenseins und/oder der Position eines zu detektierenden Objekts, beispielsweise eines Beifahrers in einem Kraftfahrzeug.

Zusätzlich kann das Treibersignal f(t) auch an einen Phasenschieber 5 angelegt werden, der die Phase des Treibersignals um 90° verschiebt und damit an seinem Ausgang ein Quadratursignal abgibt. Dieses Quadratursignal wird in einem Multiplizierer 6 mit dem Meßsignal multipliziert, so daß der Imaginärteil des Signals gebildet wird. Das Ausgangssignal des Multiplizierers 6 wird an ein Schaltungselement 7 angelegt, das gleich aufgebaut ist wie das Schaltungselement 6 und an dessen Ausgang das dem Imaginärteil der Meßgröße entsprechende Signal abgegeben wird.

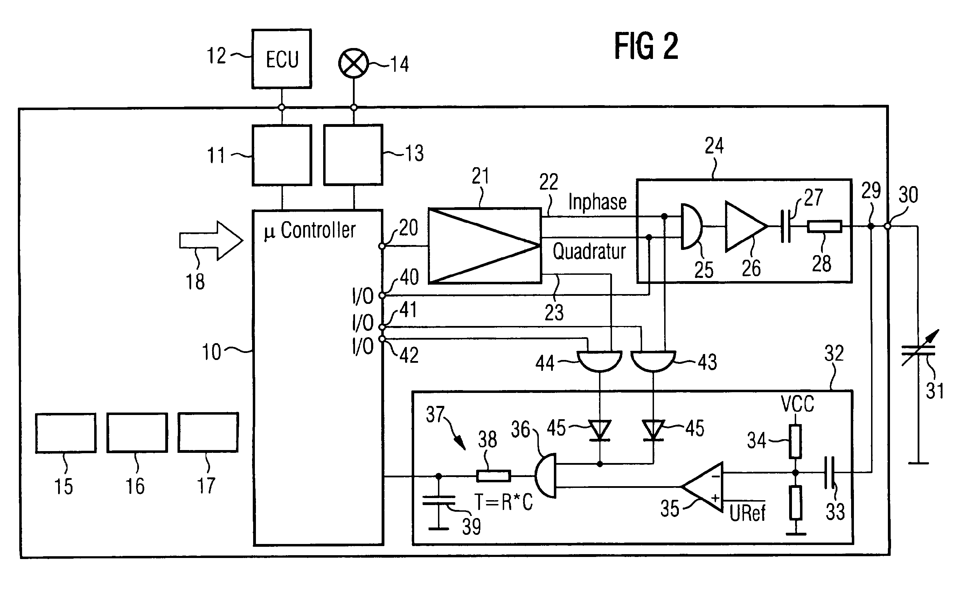

In Fig. 2 ist ein detailliertes Blockschaltbild eines Ausführungsbeispiels des kapazitiven Sensors gezeigt. Eine Steuereinrichtung 10 in Form eines Mikrocontrollers oder Mikroprozessors steht über eine Kommunikationsschnittstelle 11 mit einem Steuergerät 12 in Kommunikationsverbindung, das beispielsweise ein Insassenschutzsystem wie etwa einen Beifahrer-Frontairbag oder einen Beifahrer-Seitenairbag steuert und die Auslöseentscheidung in zusätzliche Abhängigkeit von dem Belegungszustand und gegebenenfalls auch von der Position der auf dem Kraftfahrzeugsitz befindlichen Position trifft. Hierdurch können unnötige oder personengefährdende (beispielsweise bei sehr stark seitlich geneigter Kopfhaltung) Auslösungen unterbunden werden. Die Steuereinrichtung 10 kann weiterhin über einen Lampentreiber 13 eine Warnlampe 14 ansteuern, über die ein optisches Signal zur Anzeige des erfaßten Belegungszustands an den Fahrer oder Beifahrer abgebbar ist. Die Steuereinrichtung 10 ist ferner in üblicher Weise mit einer Spannungsspeisung 15, einem Überwachungszeitgeber 16 und einem nichtflüchtigen Speicher 17 zur dauerhaften Daten- oder Programmspeicherung ausgestattet und kann von außen gesteuert, beispielsweise parametriert werden, wie diese schematisch durch einen Pfeil 18 angegeben ist.

Die Steuereinrichtung 10 weist einen Signalausgang 20 auf, an dem ein hochfrequentes Erregungssignal abgegeben wird, das entweder direkt als Treibersignal zur Speisung mindestens eines kapazitiven Sensorelements 31, oder aber zur Erzeugung des Treibersignals eingesetzt wird. Das am Ausgang 20 abgegebene Erregungssignal kann schmalbandig oder breitbandig sein und ist beim gezeigten Ausführungsbeispiel ein breitbandiges binäres Pseudo-Rauschsignal mit einer Frequenz von vorzugsweise 100 kHz oder höher (hier: etwa 400 kHz). Das Erregungssignal wird an ein Schaltungselement 21 zur Erzeugung des Treibersignals und eines hierzu um 90° phasenverschobenen, ansonsten identischen Quadratursignals angelegt. Das Treibersignal (Synchronsignal) wird auf einer Leitung 22 ausgegeben, während das Quadratursignal auf einer Leitung 23 ausgegeben wird. Sofern die Erzeugung eines Quadratursignals 23 nicht erforderlich ist, können das Schaltungselement 21 und die Leitung 23 auch entfallen und die Leitung 22 dann direkt an den Ausgang 20 angeschlossen werden.

Das Schaltungselement 21 kann im einfachsten Fall ein Phasenschieber sein, der auf einem Zweig das eingangsseitig anliegende Signal unverändert durchläßt und zur Leitung 22 speist und in einem zweiten Zweig eine Phasenverschiebung um π/2 durchführt und dieses phasenverschobene Ausgangssignal auf die Leitung 23 speist.

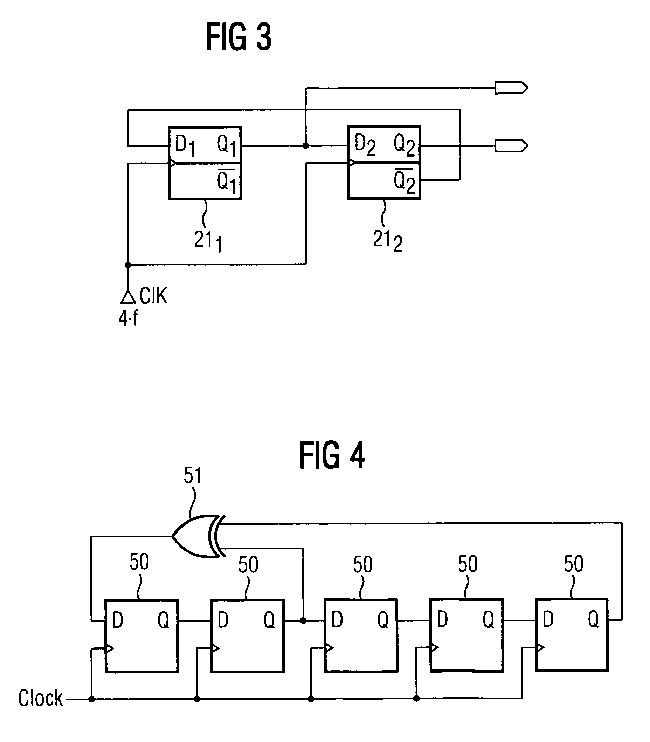

Beim vorliegenden Ausführungsbeispiel ist das Schaltungselement 21 in der in Fig. 3 dargestellten Weise ausgebildet und enthält zwei D-Flipflops 21₁ und 21₂, deren Takteingänge jeweils mit dem Ausgang 20 verbunden sind. Der Q-Ausgang des D-Flipflops 21₁ ist an dem D-Eingang des Flipflops 21₂ angeschlossen, dessen Q-Ausgang auf den D-Eingang des D-Flipflops 21₁ rückgekoppelt ist. Das Synchronsignal wird am Q-Ausgang des D-Flipflops 21₁ abgegriffen, während das Quadratursignal am Q-Ausgang des D-Flipflops 21₂ ausgegeben wird. Diese Q-Ausgänge sind mit den Leitungen 22 bzw. 23 verbunden. Die Schaltung gemäß Fig. 3 bewirkt zugleich auch eine Frequenzteilung um den Faktor 4. Dieser Effekt kann dadurch kompensiert werden, daß das am Ausgang 20 abgegebene Signal mit einer Frequenz generiert wird, die vier Mal so hoch wie die gewünschte Frequenz des Treibersignals ist. Beim gezeigten Ausführungsbeispiel weisen das Treibersignal und das Quadratursignal jeweils eine Frequenz von 100 kHz auf, wobei diese Frequenz je nach Anwendungsfall und zu erwartenden Störungen aber auch variiert werden kann.

Die Leitung 22 ist mit einer Treiberschaltung 24 verbunden, die ein UND-Glied 25, einen Signalverstärker 26, einen zur Gleichstromsperrung dienenden Kondensator 27 und eine Impedanz 28 umfaßt, die zusammen mit dem Kondensator 27 seriell an den Ausgang des Verstärkers 26 angeschlossen ist. Der nicht mit dem Kondensator 27 verbundene Anschluß der Impedanz 28 ist mit dem Ausgang der Treiberschaltung verbunden, der seinerseits an einen Ausgangsanschluß 30 des die signalgenerierenden und auswertenden Komponenten umfassenden Steuergeräts (in Fig. 2 durch die gezeigte rechteckförmige durchgezogene Linie veranschaulicht) angeschlossen ist. Mit dem Ausgang 30 ist ein kapazitives Sensorelement 31 verbunden, das beispielsweise als in den Beifahrersitz integrierte Sensormatte ausgebildet ist und dessen Kapazitätswert sich abhängig von dem Vorhandensein oder Fehlen und/oder der Position des zu detektierenden Objekts, hier des Passagiers (Beifahrer oder einer auf Rücksitzbank befindlichen Person) ändert.

Die Impedanz 28 kann ein reiner reeller Widerstand sein, weist vorzugsweise aber zusätzlich eine induktive Komponente auf, so daß die Impedanz 28 und das kapazitive Sensorelement 31 einen Serienschwingkreis bilden. Vorzugsweise ist die Schwingkreisresonanzfrequenz in dem breitbandigen Treibersignal enthalten, so daß der Schwingkreis (auch) mit seiner bei fehlendem Passagier eingenommenen Resonanzfrequenz angeregt wird.

Wenn der Fahrzeugpassagier auf dem Fahrzeugsitz Platz nimmt und/oder in die vom Sensorelement 31 überwachte Position (zum Beispiel seitlich verlagerte Kopfhaltung) gelangt, verändert sich der Kapazitätswert des Sensorelements 31 deutlich, so daß der Sehenresonanzschwingkreis außer Resonanz gelangt oder sich seine Resonanzfrequenz deutlich verschiebt. Damit ergeben sich noch leichter auswertbare Signalveränderungen als im Fall einer Speisung des Sensorelements 31 über eine keine Induktivitätskomponente aufweisende Impedanz 28. Auch tritt bei induktiver Komponente der Impedanz 28 eine Phasenverschiebung in einem verbreiterten Bereich von +90° bis -90° auf, die sich ebenfalls besser detektieren läßt als eine Phasenverschiebung von maximal nur π/2. Über den Realteil der Impedanz 28 läßt sich die Dämpfung des Schwingkreises einstellen, so daß beispielsweise zu starke Signalabstrahlungen nach außen verhindert werden können.

Mit einem Verbindungspunkt 29 zwischen der Impedanz 28 und dem kapazitiven Sensorelement 31 ist der Eingang einer Auswerteschaltung 32 verbunden, die abhängig vom Sensorsignaltyp für analoge oder digitale Verarbeitung ausgelegt sein kann und hier aufgrund des binären, d.h. nur zwischen zwei Pegeln wechselnden Treibersignals eine binäre Verarbeitung ausführt. Die Auswerteschaltung 32 enthält eine eingangsseitige Aufbereitungsstufe mit einem Vergleicher 35, dessen einem Eingang das am Verbindungspunkt 29 abgegriffene Meßsignal über einen Gleichstrom sperrenden Koppelkondensator 33 und eine Pegelanhebestufe 34 zugeführt wird und an dessen anderem Eingang eine feste Referenzspannung anliegt. Das abhängig vom Eingangssignalpegel zwischen hohem und niedrigem Pegel wechselnde Ausgangssignal des Vergleichers 35 ist an einen Eingang eines UND-Glieds 36 angelegt, an dessen Ausgang ein Integrator 37 angeschlossen ist. Der Integrator 37 ist hier als Tiefpaßfilter mit einer Reihenschaltung aus einem Widerstand 38 und einem gegen Masse geschalteten Kondensator 39 gebildet, wobei das Integrator-Ausgangssignal am Verbindungspunkt zwischen dem Widerstand 38 und dem Kondensator 39 abgegriffen wird. Da die Zeitkonstante des Tiefpaßfilters 37 im Vergleich mit der Taktfrequenz des Treibersignals sehr hoch ist, führt das Tiefpaßfilter eine Mittelwertbildung durch, so daß sich ein Integrationseffekt einstellt. Das analoge Ausgangssignal des Integrators 37 ist an einen Eingangsanschluß der Steuereinrichtung 10 angelegt, die den Signalpegel und/oder dessen Wechsel zur Erkennung des Sitzbelegungszustands und ggf. der Art, wie der Sitz durch den Passagier belegt ist, auswertet.

Die Steuereinrichtung 10 weist drei Ausgänge 40, 41, 42 auf, an denen Wählsignale abgegeben werden. Der Ausgang 40 ist über eine Leitung mit dem anderen Eingang des UND-Glieds 25 verbunden, so daß die Treiberschaltung 24 selektiv aktivierbar und deaktivierbar ist. Dies ist insbesondere bei mehrkanaliger Auslegung der Treiberschaltung 24 und der Auswerteschaltung 32 sinnvoll. Bei einkanaliger Ansteuerung (nur ein einziges Sensorelement 31) kann das UND-Glied 25 auch weggelassen werden.

Der Ausgang 41 ist mit einem Eingang eines UND-Glieds 43 verbunden, dessen anderer Eingang mit der Leitung 22 verbunden ist und damit das Treibersignal empfängt. Das auf der Leitung 23 vorhandene Quadratursignal ist an einen Eingang eines UND-Glieds 44 angelegt, dessen anderer Eingang mit dem Ausgang 42 verbunden ist. Die Ausgänge der UND-Glieder 43 und 44 sind unter Zwischenschaltung von Gleichrichtern 46 zusammengefaßt und mit einem Eingang des UND-Glieds 36 verbunden, an dessen anderem Eingang das Ausgangssignal des Vergleichers 35 anliegt.

Nachfolgend wird die Funktionsweise der Schaltung näher erläutert. Das auf der Leitung 22 vorhandene Treibersignal (Synchronsignal) wird über die Treiberschaltung 24 (bei durchgeschaltetem UND-Glied 25) in Form eines binären Pseudozufallssignals oder Pseudorauschsignals an das Sensorelement 31 angelegt. Das vom Sensorelement 31 abgegriffene, von dessen Kapazität abhängige Meßsignal wird nach Rechteckflankenrückgewinnung mittels des Vergleichers 35 einer Autokorrelation mit dem Treibersignal unterzogen, das bei aktiviertem Ausgang 41 durch das UND-Glied 43 übertragen wird. Das UND-Glied 36 wirkt damit als Autokorrelator, an dessen beiden Eingängen einerseits das binäre Treibersignal und andererseits das binäre Meßsignal anliegt und das nur dann durchschaltet, wenn beide Signale jeweils hohen Pegel aufweisen. Wenn der Sitz nicht belegt ist, liegt hohe Korrelation, d.h. nur geringe Phasenverschiebung zwischen dem Treibersignal und dem Meßsignal vor, so daß das UND-Glied 36 Hochpegelsignale im wesentlichen im Rhythmus der Hochpegelabschnitte des Treibersignals erzeugt. Damit weist das Ausgangssignal des Integrators 37 nahezu maximalen Wert auf. Wenn der Sitz belegt wird, verschiebt sich die Phase des Meßsignals deutlich gegenüber derjenigen des Treibersignals, so daß die Korrelation stark abnimmt und das Ausgangssignal des Integrators auf deutlich verringerten Wert absinkt. Bei dieser Meßphase repräsentiert das Ausgangssignal des Integrators 37 den Realteil des Meßsignals.

Wenn gewünscht wird, den Imaginärteil zu ermitteln, wird der Ausgang 41 abgeschaltet und der Ausgang 42 eingeschaltet, so daß nun das Quadratursignal über das UND-Glied 44 an den Eingang des UND-Glieds 36 als mit dem Meßsignal zu korrelierendes Signal angelegt wird. Die Steuereinrichtung 10 kann diese Umschaltung der Ausgänge 41 und 42 zyklisch oder je nach Bedarf vornehmen, wobei die Einschaltdauer der Ausgänge 41 und 42 und damit der UND-Glieder 43 bzw. 44 jeweils ein Vielfaches der Taktdauer des Treibersignals beträgt, so daß über einen entsprechend langen Zeitabschnitt autokorreliert und integriert wird und damit ausreichend hohe Signalamplitude gebildet wird.

Anstelle eines binären Pseudorauschsignals kann auch ein breitbandiges pulsbreitenmoduliertes Signal oder ein sonstiges breitbandiges binäres Signal als Treibersignal eingesetzt werden. Alternativ ist es auch möglich, breitbandige analoge Signale als Treibersignale zu benutzen, wobei dann anstelle der binären Auswertung gemäß Fig. 2 eine analog arbeitende Auswerteschaltung 32 sowie eine analog ausgelegte Treiberschaltung 24 eingesetzt werden. Das an dem Sensorelement 31 in diesem Fall abgegriffene analoge Meßsignal, das durch das über die Impedanz 28 zugeführte analoge Treibersignal hervorgerufen wird, wird dann durch eine analoge Schaltung einer Autokorrelation mit dem Treibersignal und/oder dem Quadratursignal unterzogen. Im einfachsten Fall wird das Meßsignal über einen abhängig von der Polarität des Treibersignals oder Quadratursignals betätigten Umschalter zur Multiplikation geführt und an eine ausgangsseitige Stufe, beispielsweise einen Integrator, angelegt.

Die in Fig. 2 gezeigte Schaltung kann mehrkanalig ausgelegt sein, wobei für jeden Kanal eine eigene Treiberschaltung 24, ein Sensorelement 31 und eine Auswerteschaltung 32 vorgesehen ist. Damit ist es möglich, mehrere kapazitive Sensorelemente 31, beispielsweise in Form von Sensormatten, in der Rücklehne oder Sitzfläche eines Kraftfahrzeugsitzes, beispielsweise des Beifahrersitzes, anzuordnen. Damit kann der Sitzbelegungszustand an einer Mehrzahl von Positionen abgefragt werden, so daß nicht nur eine zuverlässige, da redundante Sitzbelegungserkennung erreichbar ist, sondern auch noch die Art der Sitzbelegung, beispielsweise eine schräge Körperhaltung, ein schräg gelegter Kopf oder eine nach vorne gebeugte Sitzhaltung erkennbar ist. Dies erlaubt eine gut an die aktuelle Körperhaltung des Passagiers angepaßte Steuerung einer eventuell notwendigen Auslösung eines Insassenschutzsystems. In diesem Fall werden die UND-Glieder 25 der Treiberschaltungen 24 zyklisch selektiv durchgeschaltet, wozu entweder die Steuereinrichtung 10 eine entsprechende Anzahl von Ausgängen 40 aufweist oder ein diese zyklische Durchschaltung steuernder Multiplexer vorgesehen ist, der beispielsweise durch Ausgangssignale an den Ausgängen 40 gesteuert wird. Auch die UND-Glieder 43 und 44 sind dann vorzugsweise in gleicher Anzahl wie die Sensorelemente 31 und die Auswerteschaltungen 32 vorgesehen und werden selektiv für den jeweils gerade angesteuerten Kanal und die gerade gewünschte Realteil- oder Imaginärteilermittlung durchgeschaltet. Die Steuereinrichtung 10 weist dann auch eine der Kanalanzahl entsprechende Anzahl von Eingängen zur Aufnahme der Ausgangssignale der Auswerteschaltungen 32 auf.

In Fig. 4 ist der Aufbau einer Schaltungsanordnung zur Erzeugung eines breitbandigen binären Pseudorauschsignals dargestellt. Die Schaltungsanordnung enthält fünf in Kaskade geschaltete D-Flipflops 50, deren Q-Ausgänge mit den D-Eingängen der jeweils nachfolgenden D-Flipflops verbunden sind. Die Takteingänge der D-Flipflops werden gemeinsam durch ein Taktsignal, beispielsweise ein 400 kHz-Signal gespeist. Die Q-Ausgangssignale des zweiten und fünften D-Flipflops sind an ein Exlusiv-ODER-Glied 51 angelegt, dessen Ausgang mit dem D-Eingang des ersten D-Flipflops verbunden ist. Das binäre Pseudozufallssignal kann am Ausgang jedes der D-Flipflops abgegriffen werden. Vorzugsweise ist der Anfangszustand der D-Flipflops so festgelegt, daß sich im Ausgangssignal etwa gleich viel Nullen und Einsen ergeben. Bei der gezeigten Schaltung wird eine Bitfolge mit einer Periodenlänge von 31 Bit erzeugt, die aus 16 Einsen und 15 Nullen besteht. Die Anzahl von D-Flipflops kann auch mehr oder weniger als fünf betragen, wobei sich bei höherer D-Flipflop-Anzahl eine drastische Verringerung der Periodizität ergibt. Eine solche binäre Pseudozufallsbitsequenz eignet sich sehr gut für Autokorrelation, da die Übereinstimmung der Bitfolge drastisch abnimmt, wenn eine der Bitfolgen zeitlich verschoben wird, und sie dem Verhalten von weißem Rauschen gut angenähert ist. Bei einfachem Schaltungsaufbau ergibt sich eine sehr lange Bitfolge. Ferner ist nur kleiner oder vernachlässigbarer Gleichspannungsoffset vorhanden, da die Anzahl von Einsen vorzugsweise nur um 1 größer ist als die Anzahl von Nullen. Schließlich kann sich die Schaltung auch sehr rasch und einfach mit der Bitfolge synchronisieren.

Die erfindungsgemäße Sensoranordnung eignet sich allgemein zur Erfassung kapazitiver Änderungen, wird hier aber bevorzugt bei einem Kraftfahrzeug-Insassenschutzsystem zur Erkennung der Sitzbelegung des Beifahrersitzes, Fahrersitzes oder eines sonstigen Passagiersitzes eingesetzt, und kann ein Bestandteil eines Kraftfahrzeug-Insassenschutzsystems darstellen.

## Patentansprüche

1. Kapazitiver Sensor zum Erfassen des Vorhandenseins und/oder der Position eines Objekts, insbesondere Sitzbelegungssensor in einem Kraftfahrzeug, mit einer Treiberschaltung (24), die ein Treibersignal oder ein hiervon abgeleitetes Signal an mindestens ein Sensorelement (31) anlegt, dessen Kapazitätswert sich in Abhängigkeit von dem Vorhandensein und/oder der Position des Objekts ändert, und einer Auswerteschaltung (32), die mit dem Sensorelement (31) verbunden ist und ein an dem Sensorelement (31) abgegriffenes Meßsignal auswertet, **dadurch gekennzeichnet,** daß das Treibersignal ein breitbandiges Treibersignal ist und daß die Auswerteschaltung (32) eine Autokorrelationseinrichtung (36) aufweist, an die das Treibersignal und das Meßsignal angelegt sind und deren Ausgangssignal ein Maß für den aktuellen Kapazitätswert des kapazitiven Sensorelements (31) darstellt.

2. Sensor nach Anspruch 1, **dadurch gekennzeichnet,** daß das breitbandige Treibersignal ein binäres, nur zwischen zwei Pegeln wechselndes Signal, insbesondere ein binäres Pseudorauschsignal oder pulsweitenmoduliertes Signal ist.

3. Sensor nach Anspruch 1 oder 2, **dadurch gekennzeichnet,** daß die Autokorrelationseinrichtung ein Multiplikationsglied zur Multiplikation des Treibersignals mit dem Meßsignal aufweist.

4. Sensor nach einem der vorhergehenden Ansprüche, **dadurch gekennzeichnet,** daß die Autokorelationseinrichtung einen Multiplikator, z.B. ein UND-Glied (36) enthält.

5. Sensor nach einem der vorhergehenden Ansprüche, **dadurch gekennzeichnet,** daß mit dem Ausgang der Autokorrelationseinrichtung (36) ein Integrator (37), insbesondere in Form eines Tiefpaßfilters (38, 39), verbunden ist.

6. Sensor nach einem der vorhergehenden Ansprüche, **dadurch gekennzeichnet,** daß zusätzlich zu dem Treibersignal ein um 90° gegenüber dem Treibersignal verschobenes Quadratursignal gebildet wird, das an die Autokorrelationseinrichtung (36) zur Korrelation mit dem Meßsignal anlegbar ist.

7. Sensor nach einem der vorhergehenden Ansprüche, **dadurch gekennzeichnet,** daß mehrere Treiberschaltungen (24), mehrere Sensorelemente (31) und mehrere Auswerteschaltungen (32) vorgesehen sind, wobei die Sensorelemente (31) in einem oder mehreren Sitzen zur Erfassung des Vorhandenseins und gegebenenfalls der Position einer oder mehrerer Personen angeordnet sind.

8. Sensor nach einem der vorhergehenden Ansprüche, **dadurch gekennzeichnet,** daß die Treiberschaltung (24) eine Impedanz (28) mit induktiver Komponente aufweist, die mit dem Sensorelement (31) verbunden ist, oder der Sensor durch eine geeignete Schaltung bandpaßähnliche Charakteristik aufweist.

9. Sensor nach Anspruch 8, **dadurch gekennzeichnet,** daß anstelle des breitbandigen Treibersignals ein schmalbandiges Treibersignal zur Erregung des durch die induktive Komponente der Impedanz (28) und das kapazitive Sensorelement (31) gebildeten Schwingkreises eingesetzt wird.

10. Verfahren zum Erfassen des Vorhandenseins und/oder der Position eines Objekts, insbesondere zur Sitzbelegungserkennung, bei dem ein Sensorelement mittels eines breitbandigen Treibersignals angesteuert wird und das vom Sensorelement abgegriffene Meßsignal einer Autokorrelation mit dem breitbandigen Treiberkorrelationssignal unterzogen wird.

11. Kraftfahrzeug-Insassenschutzsystem mit mindestens einem kapazitiven Sensor gemäß einem der Ansprüche 1 bis 9.
